Europäisches Patentamt

European Patent Office

Office européen des brevets

(19)

(11) Veröffentlichungsnummer: **0 351 689**
**B1**

(12) **EUROPÄISCHE PATENTSCHRIFT**

(45) Veröffentlichungstag der Patentschrift: **16.01.91**

(21) Anmeldenummer: **89112616.1**

(22) Anmeldetag: **11.07.89**

(51) Int. Cl.⁵: **B 60 G 7/00,** F 16 F 1/38, F 16 C 11/06

(54) **Gelenklager, insbesondere für einen Achslenker eines Kraftfahrzeugs.**

(30) Priorität: **16.07.88 DE 3824271**

(43) Veröffentlichungstag der Anmeldung:
**24.01.90 Patentblatt 90/04**

(45) Bekanntmachung des Hinweises auf die Patenterteilung:
**16.01.91 Patentblatt 91/03**

(84) Benannte Vertragsstaaten:
**AT DE FR GB IT NL**

(56) Entgegenhaltungen:
**DE-A-2 144 507**
**DE-A-2 434 501**
**DE-B-1 047 036**
**FR-A-1 439 913**
**GB-A- 576 173**
**GB-A- 621 355**

(73) Patentinhaber: **Jörn GmbH**
**Porschestrasse 10**
**D-7012 Fellbach (DE)**

(72) Erfinder: **Zawadzki, Bernd, Dipl.-Ing.**
**Talstrasse 14**
**D-7054 Korb (DE)**

(74) Vertreter: **Neubauer, Hans-Jürgen, Dipl.-Phys.**
**Fauststrasse 30**
**D-8070 Ingolstadt (DE)**

Courier Press, Leamington Spa, England.

**Beschreibung**

Die Erfindung betrifft ein Gelenklager, insbesondere für einen Achslenker eines Kraftfahrzeugs, nach dem Oberbegriff des Anspruchs 1.

Ein allgemein bekanntes und üblicherweise verwendetes Gelenklager zur Verbindung eines Achslenkers mit dem Kraftfahrzeugaufbau besteht aus einem länglichen, inneren Lagerteil, das mit dem Fahrzeugaufbau über Lagerarme verschraubt ist. Dieses Lagerteil hat in einem mittleren Bereich eine ballige, kugelförmige Verdickung mit einem bestimmten Radius.

Auf dieser so gebildeten Kugelfläche liegen Kunststoff-Gleitelemente mit entsprechend geformten Gleitflächen, die in einem Metallgehäuse gehalten sind. Das Metallgehäuse umfaßt somit mit den eingelagerten Kunststoff-Gleitelementen die Kugelform, wodurch sich eine kugelgelenkartige Ausbildung ergibt und das Metallgehäuse in bestimmten Grenzen in allen Raumrichtungen gegenüber dem inneren Lagerteil verschwenkbar ist. Mit dem Metallgehäuse ist der Achslenker verbunden.

Zwangsläufig ergeben sich bei einer solchen Ausführung Spalte zwischen dem ersten Lagerteil und den Stirnseiten des Metallgehäuses sowie freie liegende Kugel-Gleitflächen zu den Seiten des langgestreckten Metallteils hin. Diese Stellen sollen dadurch geschützt werden, daß an beiden Stirnseiten je ein ringförmiger Balg angebracht ist, der mit dem äußeren Rand mit dem Metallgehäuse und mit dem inneren Rand mit dem inneren Metallteil durch Federringe verbunden ist. Bei einer Relativbewegung zwischen dem Metallgehäuse verformen sich die beiden Bälge entsprechend.

Die Ausführungsform nach dem Stand der Technik ist aufwendig in der Herstellung und entsprechend teuer. Insbesondere ist es notwendig, genau bearbeitete Kugel-Gleitflächen herzustellen. Da die Kunststoff-Gleitelemente bei kardanischen Bewegungen in allen Richtungen auf der Kugeloberfläche gleiten, ist es erforderlich, diese Kugel-Gleitflächen in allen Raumrichtungen mit möglichst geringen Toleranzen herzustellen und zu bearbeiten.

Ein weiterer Nachteil besteht darin, daß die verwendeten Kunststoff-Gleitelemente praktisch keine elastischen Eigenschaften haben. Einerseits werden dadurch die Kräfte zwischen den Lagerteilen, insbesondere auch auf die Kunststoff-Gleitelemente, ohne Dämpfung mit allen Kraftspitzen direkt übertragen, was die Lebensdauer ungünstig beeinflußt. Andererseits werden auch sehr kleine Relativbewegungen der Lagerteile jedesmal sofort in reibeine Gleitbewegungen zwischen den Bauteilen umgesetzt, da praktisch keine Relativbewegung in einem Bauteil molekular aufgenommen wird. Zudem ist die Anbindung wegen der fehlenden Elastizität der Kunststoff-Gleitelemente sehr starr, was sich ungünstig auf die Fahrzeugakustik, die Geräuschbildung und die Geräuschübertragung auswirkt.

Der abdichtende Balg steht weit ausgewölbt an den Stirnseiten des Lagers vor und wird daher regelmäßig leicht beschädigt, wodurch reibende Partikel in das Lager eindringen können und dann das Lager schnell zerstört wird. Die Abdichtbälge werden lediglich mit Federringen gehalten und es hat sich gezeigt, daß dies für eine notwendig gute Dichtung nicht ausreichend ist. Beispielsweise können bei der Verwendung üblicher Hochdruck-Reinigungsgeräte durch den scharfen Wasserstrahl Schmutzpartikel und Wasser unter den Klemmringen hindurch in das Lagerinnere gedrängt werden, wodurch dann das Lager schnell unbrauchbar wird. Die Gummischicht des Balges kann durch auftretende Falten und Knicke auch betriebsmäßig stark belastet sein.

Ein weiter bekanntes Lager (US—A 3 680 924) weist ebenfalls ein kugeliges Innenteil mit sphärischen Gleitflächen auf. Also seitliche Abdichtungen sind Gummiwände verwendet, die zwischen koaxial liegenden und auf das erste und zweite Lagerteil aufgepreßten Lagerringen angebracht sind. Die Lagerringe liegen hier im Abstand zu den sphärischen Gleitflächen, die beispielsweise mit Teflon beschichtet sein sollen.

Bei der Bildung des Oberbegriffs des Hauptanspruchs wurde von einem bekannten Gelenklager für die Lagerung von Lenkern an Kraftfahrzeugen ausgegangen (DE—A 21 44 507), das aus einem kugeligen, mit Befestigungsarmen versehenen, metallischen Innenteil und einem umgebenden Gummihohlkörper besteht, der innen und außen kugelige Flächen aufweist und außen mit zwei anvulkanisierten, metallischen Kugelkalotten versehen ist. Der Gummihohlkörper ist dabei radial geteilt, wodurch so zwei Gummi-Metall-Körper in Halbkugelschalen-Ausführung gebildet werden. Auf die inneren Gummiflächen sind Innenhülsen aus gerollten, dünnwandigen Blechen aufvulkanisiert und auf der gesamten Fläche mit Löchern versehen, wobei die verbleibenden Blechoberflächen mit einem Film aus Gummi überzogen sind. Der Gummihohlkörper ist nach dem Zusammenziehen der Kugelkalotten kraftschlüssig durch Reibungshaftung auf dem Innenteil festgelegt. Zudem ist der Gummihohlkörper durch die beim Zusammenziehen aufgebrachte Gummivorspannung durch Reibungshaftung auch in einem Aufnahmeauge mit zylindrischem Innenraum festgelegt. Bei den radialen Belastungen wird der Gummihohlkörper auf Druck beansprucht und bei Verdrehungen in den kardanischen Richtungen entsteht im wesentlichen nur Schub im Gummi. Das bekannte Gelenklager hat somit in den radialen Richtungen gute Führungseigenschaften und ist, in gewünschter Weise gegenüber Verdrehungen innerhalb gewisser Verdrehwinkel nur mit geringen Rückstellkräften behaftet, wobei alle Relativbewegungen zwischen den Lagerteilen molekular im Gummi aufgenommen werden; Gleitbewegungen erfolgen hier nicht. Dies hat aber zur Folge, daß nur relativ geringe, kardanische Bewegungen und insbesondere nur relativ geringe Schwenkbewegungen um die Längsachse des Lagers aufgenommen werden können, was für den Einsatz zur Lagerung von Achslenkern an Kraftfahrzeugen mit großen Einfederwegen nicht ausreichend sein kann. Zudem werden bei zunehmenden Auslenkungen um die Lagerachse große Rückstellkräfte erzeugt, die beispielsweise das Lenkverhalten eines Achslenkers ungünstig beeinflußen können und daher unerwünscht sind.

Bei diesem Gelenklager werden alle Relativbewegungen ohne gleitende Bewegungen im Gummi molekular aufgenommen, wobei der Gummi dicht an seinen Anlageflächen anliegt, so daß es hier auch nicht notwendig ist, Maßnahmen für eine stirnseitige Abdichtung vorzusehen.

Ein besonderer Vorteil dieses gattungsgemäßen Gelenklagers besteht in der Möglichkeit, den Gummi im Lager mit einer hohen Vorspannung zu beaufschlagen. Durch die hohe Vorspannung im Gummi wird die Dauerhaltbarkeit des Gelenklagers in bekannter Weise wesentlich verbessert und erhöht.

Weiter sind Gelenklagerausführungen bekannt (GB—A 637 901), bei denen zusätzlich zu einer Gummischicht eine Gleitschicht zwischen Gummischicht und Aufnahmeauge oder Gummischicht und Innenteil vorgesehen ist. Damit wird erreicht, daß bei kleineren Auslenkungen diese molekular in der Gummischicht aufgenommen werden, bei größeren Auslenkungen jedoch ein Durchrutschen möglich ist.

Solche Gleitschichten werden aufgrund guter Gleiteigenschaften üblicherweise aus Kunststoffen, wie Teflon oder Polyamiden, hergestellt. Bekanntlich haben solche Materialien ein Fließverhalten, das umso größer ist, je höher die Druckbeaufschlagung und Belastung ist. Dies bedeutet, daß bei längerem Einsatz die Gleitschichten dünnen werden und sich seitlich in ihrer Ausdehnung vergrößern. Dieser Effekt wird insbesondere dann verstärkt, wenn von vorneherein eine hohe Vorspannung im Gummi zur Erhöhung der Gummidauerhaltbarkeit aufgebracht ist.

Das Fließverhalten der Gleitschichten führt somit zu einer allmählichen Reduzierung der Gleitschichtdicke und dadurch zu einer Reduzierung der Dauerhaltbarkeit dieser Gleitschicht. Zudem wird die Abstimmung des Lagers verändert, da mit abnehmender Gleitschichtdicke die Gummihöhe der unter Vorspannung eingebrachten Gummischicht größer wird. Damit wird die Federkonstante geringer und die Auslenkungswege im Lager größer, was die Dauerhaltbarkeit weiter reduziert und zusätzlich das Wegfließen der Gleitschicht fördert.

Aufgabe der Erfindung ist es demgegenüber, bei einem unter hoher Gummivorspannung stehenden Gelenklager die Dauerhaltbarkeit zu verbessern.

Diese Aufgabe wird mit den Merkmalen des Anspruchs 1 gelöst.

Gemäß Anspruch 1 weist das metallische Innenteil zu beiden Seiten der Verdickung koaxial mit der Lagerlängsachse zylindrische Teilstücke auf, wobei sowohl die Außenflächen der Verdickung als auch die Außenflächen der zylindrischen Teilstücke Gleitflächen sind. Der Gummi-Metall-Körper enthält ein Innenrohr, bzw. die Schalenteile je ein Innenrohrteil, mit einer Innenfläche entsprechend der Form der Gleitflächen. Das Innenrohrteil hat somit zu beiden Seiten zylindrische Teilbereiche und eine mittlere Wölbung entsprechend der Form der Verdickung. Das Innenrohr liegt gleitbar am metallischen Innenteil an. Im Falle eines Gelenklagers für einen Achslenker eines Kraftfahrzeugs ist die Lenkerstange mit dem Aufnahmeauge verbunden und das Innenteil mit seinen Befestigungsarmen beidseitig mit dem Fahrzeugaufbau verschraubt.

Mit den vorstehenden Merkmalen wird erreicht, daß die, beispielsweise bei einer Achslenkerlagerung, großen Schwenkbewegungen in der Einfederrichtung durch eine gleitende Drehung des Innenrohrs um den Lagerachse aufgenommen werden. Kleine Schwenkbewegungen in dieser Richtung werden zuerst in der Gummischicht aufgenommen und erst ab einem bestimmten Drehmoment entsprechend der Haftreibung zwischen Innenrohr und Innenteil bei größerer Einfederung wird das Innenrohr am Lagerbolzen verdreht. Somit führt nicht schon jede geringe Einfederung zu einer gleitenden und reibenden Bewegung zwischen Innenrohr und Innenteil, so daß die Belastung der Gleitflächen reduziert und die Lebensdauer des Lagers erhöht wird.

Kardanische Bewegungen in den anderen Raumrichtungen sind insbesondere bei der Lagerung von Achslenkern wesentlich kleiner, so daß diese ohne Schwierigkeiten von der Gummischicht aufgenommen werden können. Aufgrund der Lagerausführung mit der mittleren Verdickung im Lagerinnenteil wird bei kardanischen Verdrehungen der Gummi im wesentlichen schubbelastet. Dadurch sind relativ große, kardanische Auslenkungen mit einer relativ weichen Anbindung, d.h. ohne größere Rückstellkräfte, möglich. In Richtung auf den Lagermittelpunkt hin wird die Gummischicht dagegen im wesentlichen auf Druck beansprucht, so daß in dieser Richtung die Anbindung relativ starr mit guten Führungseigenschaften ist.

Die Gummischicht verbessert das akustische Verhalten hinsichtlich der Geräuscherzeugung und der Geräuschübertragung und verringert auftretende Kraft- und Spannungsspitzen im Lager.

Durch die Verdickung am Innenteil und die Festlegung der Schalenteile am ungeteilten Aufnahmeauge ist der Gummi-Metall-Körper gegenüber einer axialen Verschiebung festgelegt und gehalten.

Wegen der gleitenden Verbindung zwischen dem Innenteil und dem Innenrohr ist es erforderlich, die Stirnwände bzw. die Reibflächen gegen Umwelteinflüsse abzudichten. Dies wird dadurch erreicht, daß an beiden Stirnseiten des Innenteils jeweils erste Lagerringe koaxial angebracht und mit dem Innenteil fest und dicht verbunden sind. Die Lagerringe liegen an den Stirnseiten des Innenrohrs fest, jedoch gleitbar, an und bilden somit einen axialen Anschlag für das Innenrohr bzw. die Gleitschicht. Damit wird vorteilhaft ein Wegfließen des Gleitschichtmaterials in axialer Richtung von diesen Lagerringen verhindert.

An beiden Seiten des Aufnahmeauges sind zudem jeweils weitere, zweite Lagerringe angebracht, die mit dem Aufnahmeauge fest und dicht verbunden sind. Diese Lagerringe überragen den Gummi-Metall-Körper in seitlicher Richtung mit einem Überstand und umfassen somit die ersten Lagerringe. Für eine Abdichtung des Innenbereichs des Lagers ist zwischen jeweils zwei zusammengehörigen Lagerringen eine Gummiwand dicht einvulkanisiert. Die Gummiwand liegt bevorzugt in einer Radialebene. Aus Gewichtsgründen oder wegen einer speziellen Gestaltung des Einbauraums kann auch eine im Längsschnitt dachförmig angestellte bzw. konische Lage der Gummiwände vorteilhaft sein. Mit den vorstehenden Maßnahmen wird eine zuverlässige Abdichtung des Lagers an den Stirnseiten erhalten. Solche Abdichtungen sind aus der GB—A—627 355 bereits bekannt. Die ersten Lagerringe haben gemäß der Erfindung eine Doppelfunktion, nämlich als axiale, gleitbare Anschläge für das Gleitschichtmaterial des Innenrohrs zu dienen und zugleich Träger der angehafteten Gummiwand für die Abdichtung zu sein.

Besonders vorteilhaft wird nach Anspruch 1 das Innenrohr bzw. die Innenrohrteile aus einem Kunststoff mit geeigneten Gleiteigenschaften hergestellt, wobei sich bei der Wahl einer entsprechenden Kunststoffart die Gummischicht auf das Kunststoffinnenrohr anvulkanisieren läßt.

Der Durchmesser und die Materialstärke des Kunststoffinnenrohrs werden zweckmäßig nach Anspruch 1 so gewählt, daß das Inennrohr unter elastischer Verformung des Kunststoffmaterials durch den Vorspannungsdruck in der Gummischicht auf das Innenteil aufgepreßt ist. Dadurch ergibt sich ein guter Halt ohne Spiel in der Verbindung, wobei Fertigungstoleranzen im Kunststoffmaterial ausgeglichen werden. Es wird auch eine gewisse Schwergängigkeit bei der Drehbewegung erreicht, so daß kleine Auslenkungen ohne gleitende Drehbewegung in der Gummischicht molekular aufgenommen werden. Da die Gleitschicht bzw. das Kunststoffmaterial stirnseitig durch die ersten Lagerringe abgestützt ist, kann die Gleitschicht nicht seitlich wegfließen, so daß die gewünschte und eingestellte Schwergängigkeit auch im Dauerbetrieb erhalten bleibt.

Nach Anspruch 2 ist der erste und zweite Lagerring mit der dazwischen einvulkanisierten Gummiwand vor der Montage des Gelenklagers je ein vorgefertigtes, zusammenhängendes Bauteil. Der Vulkanisiervorgang mit den beiden Lagerringen ist einfach, schnell und preiswert durchzuführen.

Nach Anspruch 3 wird eine schnelle und einfache Montage erreicht, wenn die Lagerringe auf das Innenteil und auf das Aufnahmeauge in Axialrichtung dicht aufgepreßt werden. Der Lagerring am Aufnahmeauge kann dort von der Innenseite oder an der Außenseite anliegen oder in eine Nut eingepreßt sein.

Eine besonders rückstellkraftfreie Beweglichkeit der Gummiwand ohne die Gefahr von betriebsmäßig auftretenden Knickstellen wird bei guter Dichtheit mit den Merkmalen des Anspruchs 4 dadurch erreicht, daß die Dicke der Gummiwand im mittleren Bereich zwischen den Lagerrringen dünner und zu den Lagerringen hin dicker ist.

Nach Anspruch 5 kann die Verdickung kugelförmig ausgeführt sein, wobei aber an der kugelförmigen Verdickung nur eine Verdrehung um die Lagerlängsachse durchgeführt wird, so daß auch nur in dieser Verdrehrichtung eine genaue Bearbeitung erforderlich ist.

Eine einfachere Ausführung ergibt sich gemäß Anspruch 6 dadurch, daß die Verdickung einen mittleren, etwa zylindrischen Bereich mit zur Seite hin schräg abfallenden, bevorzugt nach außen gewölbten, Flächen aufweist. Damit ergibt sich eine, insbesondere für eine Achslenkerlagerung geeignete, Druckverteilung und Führung im Gelenklager. Bevorzugt werden dabei die Druckringe zur Lagermitte hin dachförmig schräg angestellt, entsprechend den Merkmalen des Anspruchs 7. Um bei dieser Ausführung der Druckringe geeignete Anlageflächen für das axiale Zusammenpressen und die Festlegung zu erhalten, können Randflansche in radialer Richtung vorgesehen sein.

Ein funktionsfähiges Gelenklager bei einfacher Herstellung des Aufnahmeauges wird erreicht, wenn der Innenraum des Aufnahmeauges gemäß Anspruch 8 zylindrisch geformt ist.

Für eine einfache und wirksame Festlegung der Druckringe wird mit Anspruch 9 eine an sich bekannte Einrichtung aus einem Distanzring und einem Federring vorgeschlagen.

Nach Anspruch 10 liegen die beiden Innenrohrteile nicht unmittelbar aneinander, sondern sind durch einen radial umlaufenden, schmalen Spalt getrennt, so daß sich die Schalenteile gut in axialer Richtung an die Verdickung anlegen können, wobei der Spalt bei der Aufbringung der Vorspannung im Gummi praktisch geschlossen wird.

Bei der Verwendung des Gelenklagers zur Lagerung eines Achslenkers ist die Lenkerstange nach Anspruch 11 unmittelbar mit dem Aufnahmeauge verbunden.

Anhand eines Ausführungsbeispiels wird die Erfindung mit weiteren Einzelheiten, Merkmalen und Vorteilen näher erläutert.

Die einzige Fig. zeigt einen Längsschnitt durch ein fertig montiertes Gelenklager.

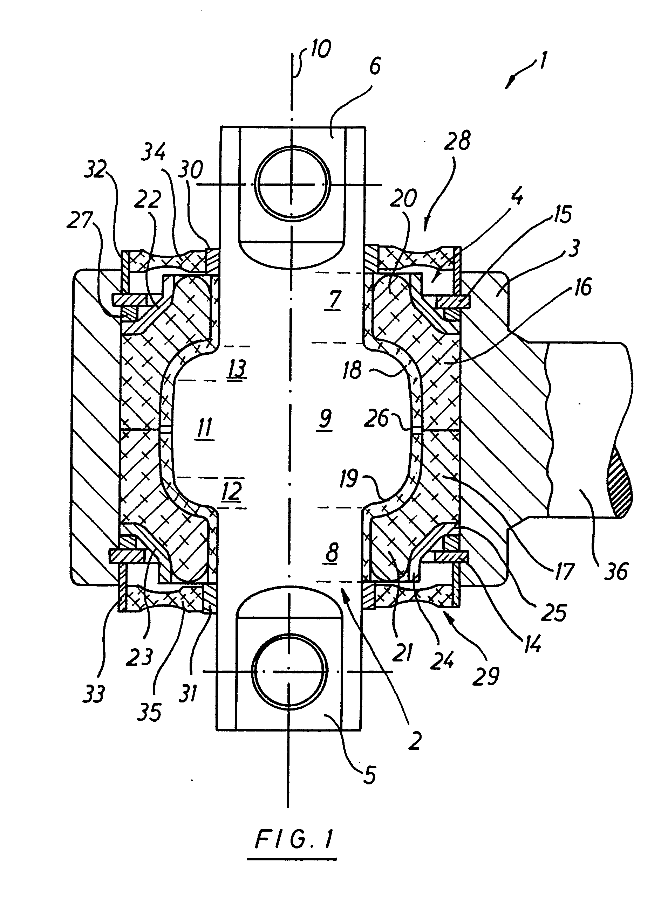

In Fig. 1 ist ein Gelenklager 1 eines Kraftfahrzeugs dargestellt. Das Gelenklager 1 besteht aus einem metallischen Innenteil 2, einem Aufnahmeauge 3 und einem dazwischen unter Vorspannung eingespannten Gummi-Metall-Element 4.

Das metallische Innenteil 2 ist länglich geformt und hat zu beiden Seiten Befestigungsarme 5, 6 mit Bohrungen für eine Schraubbefestigung an einem Kraftfahrzeugaufbau. Zur Mitte hin schließen sich beidseitig zylindrisch geformte Teilstücke 7, 8 an, die zur Mitte hin in eine Verdickung 9 übergehen. Die Verdickung 9 ist rotationssymmetrisch um eine Lagerlängsachse 10 geformt mit einem mittleren, zylindrischen Bereich 11 und mit zur Seite hin im Querschnitt kreisförmig abfallenden Flächenbereichen 1, 13.

Das Aufnahmeauge 3 hat einen zylindrischen Innenraum, wobei im seitlichen Randbereich radial umlaufende Nuten zur Aufnahme von Seegerringen 14, 15 eingebracht sind.

Der Gummi-Metall-Körper 4 ist in einer Radialebene in der Mitte der Verdickung 9 in zwei spiegelbildlich gleiche Schalenteile 16, 17 geteilt, so daß beide Schalenteile jeweils von den Stirnseiten her auf die Verdickung aufgeschoben werden können. An einem entsprechend geteilten Innenrohr 18, 19 aus Kunststoffmaterial ist jeweils eine Gummischicht 20, 21 anvulkanisiert, deren äußere Umfangsfläche etwa die Form des Innenraums des Aufnahmeauges 3 aufweist (auch im unbelasteten Zustand). Das Innenrohr 18, 19 entspricht der Form des metallischen Innenteils 2 im Bereich der Teilstücke 7, 8 und der Verdickung 9 und ist auf diesen Flächen gleitbar gelagert.

Zu beiden Seiten der Schalenteile 16, 17 bzw. der Gummischichten 20, 21 ist je ein metallischer Druckring 22, 23 anvulkanisiert. Der Druckring hat zur Lagermitte hin einen schräg angestellten Flächenbereich mit einem zur Lagerlängsachse parallel verlaufenden, inneren Randflansch 24 und einem äußeren, dazu quer stehenden Randflansch 25. Die Druckringe 22, 23 liegen in einem radial äußeren Bereich der Gummischicht 20, 21.

Die Gummischicht 20, 21 ist in Fig. 1 bereits im zusammengespannten und fertig montierten Zustand dargestellt, nachdem die Druckringe 22, 23 in axialer Richtung zusammengepreßt wurden. Daraus ergibt sich, daß im unbelasteten Zustand die Druckringe 22, 23 weiter seitlich nach außen gelegen haben und die eingezeichnete Auswölbung der Gummischichten 20, 21 zur Seite nach außen erst durch die Vorspannung erzeugt wird. Um beim Zusammenspannen eine gute Anlage der Innenrohrteile 18, 19 an der Verdickung 9 sowie eine gute, flächige Anlage der beiden Gummischichten 20, 21 zu erhalten, ist ein Spalt 26 zwischen den Innenrohrteilen 18, 19 vorgesehen.

Im zusammengespannten Zustand sind die Druckringe 22, 23 mit Hilfe von Distanzringen 27, die an den Randflanschen 25 anliegen und den Seegerringen 14, 15 gehalten.

An beiden Stirnseiten des Gelenklagers 1 sind Dichtungsbauteile 28, 29 aufgesetzt, die aus jeweils einem ersten Lagerring 30, 31, einem zweiten Lagerring 32, 33 und je einer einvulkanisierten Gummiwand 34, 35 zwischen den Lagerringen bestehen. Die ersten Lagerringe 30, 31 sind stirnseitig auf das metallische Innenteil im Bereich der zylindrischen Teilstücke 7, 8 dicht und fest aufgepreßt und liegen an den Innenrohrteilen 18, 19 stirnseitig an. Auch die zweiten Lagerringe 32, 33 sind am Aufnahmeauge 3 stirnseitig an der Innenseite dicht und fest aufgepreßt. Die Gummiwände 34, 35 haben in der Mitte zwischen den Lagerringen eine leichte Einschnürung.

Das dargestellte Gelenklager 1 hat folgende Funktion:

Beim Aufbringen eines Drehmoment um die Längsachse 10 des Gelenklagers 1 über einen dem Aufnahmeauge 3 verbundenen Achslenker 36 beim Einfedern des Kraftfahrzeugs werden geringe Auslenkungen molekular in der Gummischicht 20, 21 aufgenommen. Bei größeren Auslenkungen wird das Kunststoffinnenrohr 18, 19 gegenüber den Gleitflächen am Innenteil 9 verdreht. Dadurch erfolgt eine weitgehend rückstellkraftfreie Verbindung zwischen dem Innenteil 9 bzw. dem Fahrzeugaufbau und dem Achslenker 36. Kardanische Auslenkungen des Achslenkers 36 werden im der Gummischicht 20, 21 aufgenommen, wobei der Gummi im wesentlichen auf Schub belastet ist.

Die Stirnbereiche zwischen dem Innenteil 9 und dem Aufnahmeauge 3, d.h. der Innenbereich des Gelenklagers 1, werden durch die Dichtungsbauteile 28, 29 sicher vor Umwelteinflüssen geschützt. Relativbewegungen der Lagerteile werden in den Gummiwänden 34, 35 ohne Knicke und Faltenbildung aufgenommen. Die Stirnseiten sind dabei plan und glatt ohne vorstehende und leicht verletzbar Balgausbauchungen.

Durch die ersten Lagerringe 30, 31 und deren stirnseitige Abstützung der Innenrohrteile 18, 19 wird das als Gleitschicht verwendete Kunststoffmaterial der Innenrohrteile 18, 19 am axialen Wegfließen gehindert, so daß die Dicke der Gleitschicht auch bei langem Einsatz vorteilhaft erhalten bleibt.

**Patentansprüche**

1. Gelenklager, insbesondere für einen Achslenker eines Kraftfahrzeugs,

bestehend aus einem mit Befestigungsarmen versehenen metallischen Innenteil (2), mit einer um eine Lagerlängsachse (10) rotationssymmetrischen Verdickung (9) mit nach beiden Seiten in Richtung der Lagerlängsachse zur Lagerlängsachse hin abfallenden Flächen (12, 13),

aus einem Gummi-Metall-Körper (4), der in einer Radialebene an der Verdickung geteilt ist und die so gebildeten beiden Schalenteile (16, 17) von beiden Seiten her auf die Verdickung (9) aufgesetzt sind,

aus einem Aufnahmeauge (3), das den Gummi-Metall-Körper (4) umgibt,

wobei die beiden Schaltenteile (16, 17) von den Lagerstirnseiten her mit je einem anvulkanisierten, metallischen Druckring (22, 23) versehen sind und durch axiales Zusammenziehen der Druckringe (22, 23) eine Druckvorspannung inder Gummischicht erzeugt ist, die eine feste Verbindung durch Reibungshaftung zwischen der Gummischicht (20, 21) und dem Aufnahmeauge schafft (3) mit einer Druckkomponente in Richtung auf das metallische Innenteil (2) und

aus Einrichtungen (14, 15, 27) zur Festlegung der Druckringe im axial zusammengezogenen Zustand der beiden Schalenteile am ungeteilten Aufnahmeauge (9), dadurch gekennzeichnet,

daß das metallische Innenteil (2) zu beiden Seiten der Verdickung (9) koaxial mit der Lagerlängsachse (10) zylindrische Teilstücke (7, 8) aufweist und sowohl die Außenflächen der Verdikkung (9) als auch der zylindrischen Teilstücke (7, 8) Gleitflächen sind,

daß der Gummi-Metall-Körper (4) ein Innenrohr bzw. die Schalenteile (16, 17) je ein Innenrohrteil (18, 19) als Gleitschicht aufweist mit einer Innenfläche entsprechend der Form der Gleitflächen, d.h. daß das Innenrohr (18, 19) mit beidseitigen zylindrischen Teilbereichen und einer mittleren Wölbung entsprechend der Form der Verdickung (9) gleitbar am metallischen Innenteil (2) anliegt,

daß an beiden Seiten des metallischen Innenteils (2) jeweils erste Lagerringe (30, 31) angebracht und mit dem metallischen Innenteil (2) an dessen Umfang fest und dicht verbunden sind, wobei diese Lagerringe (30, 31) an den Stirnseiten des Innenrohrs bzw. der Innenrohrteile (18, 19) fest anliegen,

daß an beiden Stirnseiten des Aufnahmeauges (3) jeweils zweite Lagerringe (32, 33) angebracht sind, die mit dem Aufnahmeauge (3) an seinem Umfang fest und dicht verbunden sind, so daß sich je eine Fläche des ersten (30, 31) und eine Fläche des zweiten Lagerrings (32, 33) gegenüberliegen,

daß je eine Gummiwand (34, 35) an den jeweiligen Lagerringen (30, 32; 31, 33) dicht anvulkanisiert ist,

daß das Innenrohr bzw. die Innenrohrteile (18, 19) aus Kunststoff hergestellt sind und am Gummi angehaftet sind und

daß der Innendurchmesser und die Materialstärke des Innenrohrs (18, 19) so gewählt sind, daß das Innenrohr (18, 19) unter Verformung des Kunststoffmaterials auf das Innenteil (2) aufgepreßt ist.

2. Gelenklager nach Anspruch 1, dadurch gekennzeichnet, daß ein erster und zweiter Lagerring (30, 31; 32, 33) mit einer dazwischen einvulkanisierten Gummiwand (34, 35) vor der Montage des Gelenklagers (1) ein vorgefertigtes, zusammenhängendes Dichtungsbauteil (28, 29) bilden.

3. Gelenklager nach Anspruch 2, dadurch gekennzeichnet, daß die Lagerringe (30, 31; 32, 33) auf das Innenteil (2) bzw. auf das Aufnahmeauge (3) in Axialrichtung aufgepreßt sind und die ersten Lagerringe (30, 31) gegen die Stirnseiten der Innenrohrteile (18, 19) gepreßt sind.

4. Gelenklager nach einem der Ansprüche 1 bis 3, dadurch gekennzeichnet, daß die Dicke der Gummiwand (34, 35) im mittleren Bereich zwischen den Lagerringen (30, 31; 32, 33) dünner und zu den Lagerringen (30, 31; 32, 33) hin dicker ist.

5. Gelenklager nach einem der Ansprüche 1 bis 4, dadurch gekennzeichnet, daß die Verdickung (9) kugelförmig ist.

6. Gelenklager nach einem der Ansprüche 1 bis 4, dadurch gekennzeichnet, daß die Verdickung (9) einen mittleren, zylindrischen Bereich (11) mit zur Seite hin abfallenden, schrägen Bereichen (12, 13) aufweist.

7. Gelenklager nach einem der Ansprüche 1 bis 6, dadurch gekennzeichnet, daß die Druckringe (22, 23) einen zur Lagermitte hin schräg angestellten Flächenbereich aufweisen.

8. Gelenklager nach einem der Ansprüche 1 bis 7, dadurch gekennzeichnet, daß der Innenraum des Aufnahmeauges (3) zylindrisch ist.

9. Gelenklager nach einem der Ansprüche 1 bis 8, dadurch gekennzeichnet, daß die Einrichtungen zur Festlegung der Druckringe (22, 23) aus je einem Distanzring (27) und einem Seegerring (14, 15) bestehen.

10. Gelenklager nach einem der Ansprüche 1 bis 9, dadurch gekennzeichnet, daß zwischen den beiden Innenrohrteilen ein radial umlaufender, schmaler Spalt (26) vorgesehen ist.

11. Gelenklager nach einem der Ansprüche 1 bis 10, dadurch gekennzeichnet, daß mit dem Aufnahmeauge (3) ein Achslenker (36) verbunden ist.

**Revendications**

1. Palier à articulation, en particulier pour un guide d'essieu de véhicule automobile,

composé d'une partie intérieure (2) métallique dotée de bras de fixation, avec une excroissance (9) symétrique par rapport à l'axe longitudinal (10) du palier et comportant, des deux côtés, des surfaces (12, 13) inclinées vers l'axe longitudinal du palier,

d'un corps (4) en caoutchouc-métal, divisé en un plan radial au niveau de l'excroissance, les deux parties de la coquille ainsi formées (16, 17) reposant des deux côtés sur l'excroissance,

d'un oeillet de fixation (3) qui entoure le corps en métal-caoutchouc (4),

tandis que les eux parties (16, 17) de la coquille sont chacune dotées, sur les faces frontales du palier, d'ue bague de pression (22, 23) métallique fixée par vulcanisation et que, par reserrement axial des bagues de pression (22, 23), une précontrainte de pression s'exerce dans la couche de caoutchouc, provoquant entre la couche de caoutchouc (20, 21) et l'oeillet de fixation (3) une liaison solidaire par adhérence de friction, avec une composante de pression dirigée vers la partie intérieure métallique (2), et

de dispositifs servant à immobiliser, par rapport à l'oeillet de fixation non divisé (3), les bagues de pression dans l'état reserré axialement des deux parties de la coquille, caractérisé en ce que

la partie intérieure métallique (2) présente, des deux côtés de l'excroissance (9), coaxialement à l'axe longitudinal du palier (10), des parties cylindriques (7, 8) et aussi bien les surfaces extérieures de l'excroissance (9) que les parties cylindriques (7, 8) sont des surfaces de glissement,

le corps en caoutchouc-métal (4) présente un tube intérieur ou les parties (16, 17) de la coquille présentent chacune un élément de tube intérieur (18, 19) faisant fonction de couche de glissement, avec une surface intérieur correspondant à la forme des surfaces de glissement, c'est-à-dire que le tube intérieur (18, 19), avec ses deux parties cylindriques d'extrémité et son bombement central correspondant à l'excroissance (9), s'appuie contre la partie intérieure métallique (2), de manière à pouvoir glisser sur elle,

des deux côtés de la partie intérieure métallique (2) sont disposées des premières bagues (30, 31), qui sont fixées solidement et de manière étanche à la partie intérieure métallique (2), à la périphérie de cette dernière, ces bagues (30, 31) s'appliquant fermement contre les faces frontales du tube intérieur ou des parties de tube intérieur (18, 19),

sur les deux faces frontales de l'oeillet de fixation (3) sont disposées des deuxièmes bagues (32, 33) qui sont fixées solidement et de manière étanche à l'oeillet de fixation (3), à la périphérie de celui-ci, de manière à ce qu'une surface de la première bague (30, 31) fait chaque fois face à une surface de la bague série (32, 33),

une paroi en caoutchouc (34, 35) est fixée de manière étanche par vulcanisation à chaque paire de buages (30, 32,; 31, 33),

le tube intérieur ou les parties de tube intérieur (18, 19) sont fabriquées en matière plastique et adhèrent au caoutchouc, et

le diamètre intérieur et l'épaisseur du matériau du tube intérieur (18, 19) sont choisis de manière à ce que le tube intérieur (18, 19) soit comprimé sur la partie intérieure (2) sous l'effet de la déformation de la matière plastique.

2. Palier à articulation selon la revendication 1, caractérisé en ce qu'une première et une seconde bague (30, 31; 32, 33) forment avec une paroi (34, 35) en caoutchouc vulcanisé située entre elles, avant le montage du palier à articulation (1), un élément préfabriqué d'étanchéité (28, 29) qui est d'un seul tenant.

3. Palier à articulation selon la revendication 2, caractérisé en ce que les bagues (30, 31; 32, 33) sont emmanchées en force dans le sens axial sur la partie intérieure (2) ou sur l'oeillet de fixation (3) et les premières bagues (30, 31) sont comprimées contre les surfaces frontales des parties du tube intérieur (18, 19).

4. Palier à articulation selon l'une quelconque des revendications 1 à 3, caractérisé en ce que l'épaisseur de la paroi en caoutchouc (34, 35) est plus mince dans la région intermédiaire située entre les bagues (30, 31; 32, 33) et plus épaisse vers les bagues (30, 31; 32, 33).

5. Palier à articulation selon l'une quelconque des revendications 1 à 4, caractérisé en ce que l'excroissance (9) a la forme d'une boule.

6. Palier à articulation selon l'une quelconque des revendications 1 à 4, caractérisé en ce que l'excroissance (9) présente une zone médiane cylindrique (11) et des zones obliques (12, 13) qui retombent vers les côtés.

7. Palier à articulation selon l'une quelconque des revendications 1 à 6, caractérisé en ce que les bagues de pression (22, 23) présentent une portion de surface inclinée vers le milieu du palier.

8. Palier à articulation selon l'une quelconque des revendications 1 à 7, caractérisé en ce que l'espace intérieur de l'oeillet de fixation (3) est cylindrique.

9. Palier à articulation selon l'une quelconque des revendications 1 à 8, caractérisé en ce que les dispositifs d'immobilisation des bagues de pression (22, 23) se composent chacun d'un bague d'écartement (27) et d'une bague de retenue (14, 15).

10. Palier à articulation selon l'une quelconque des revendications 1 à 9, caractérisé en ce qu'une fente radiale étroite (26) est prévue entre les deux parties de tube intérieur.

11. Palier à articulation selon l'une quelconque des revendications 1 à 10, caractérisé en ce qu'un guide d'essieu (36) est relié à l'oeillet de fixation (3).

## Claims

1. Joint bearing, in particular for an axle link of a motor vehicle, consisting of a metal inside part (2) provided with attachment arms, having a thickening (9), which is rotationally symmetrical about a longitudinal axis (10) of the bearing, with surfaces (12, 13) sloping down on both sides in the direction of the longitudinal axis of the bearing, and consisting of a rubber-metal body (4), which is divided in a radial plane at the thickening and the two shell parts (16, 17) thus formed are placed on the thickening (9) from both sides, and consisting of a retainer lug (3) which surrounds the rubber-metal body (4), the two shell parts (16, 17) being provided from the end faces of the bearing each with a metal compression ring (22, 23), which is vulcanized on, and a compression prestress being generated in the layer of rubber by axial compression of the compression rings (22, 23), which compression prestress creates a fixed connection by frictional adhesion between the layer of rubber (20, 21) and the retainer lug (3) with a compression component in the direction towards the metal inside part (2), and consisting of devices (14, 15, 27) for fastening the compression rings in the axially compressed state of the two shell parts on the undivided retainer lug (9), characterized in that the metal inside part (2) has cylindrical partial pieces (7, 8) on both sides of the thickening (9) coaxially to the longitudinal axis (10) of the bearing and both the outside surfaces of the thickening (9) and of the cylindrical partial pieces (7, 8) are sliding surfaces, in that the rubber-metal body (4) has an inside tube or the shell parts (16, 17) each have an inside tube part (18, 19) as a sliding layer with an inside surface corresponding to the form of the sliding surfaces, that is to say that the inside tube (18, 19) rests with cylindrical partial regions on both sides and a central curve corresponding to the form of the thickening (9) in a sliding manner on the metal inside part (2), in that first bearing rings (30, 31) are mounted on each side of the metal inside part (2) and are connected fixedly and tightly to the metal inside part (2) on its circumference, these bearing rings (30, 31) resting fixedly on the end faces of the inside tube or of the inside tube parts (18, 19), in that second bearing rings (32, 33) are mounted on each end face of the retainer lug (3), which bearing rings are connected fixedly and tightly to the retainer lug (3) on its circumference so that in each case one surface of the first bearing ring (30, 31) and one surface of the second bearing ring (32, 33) are located opposite each other, in that a rubber wall (34, 35) is vulcanized tightly onto each of the respective bearing rings (30, 32; 31, 33), in that the inside tube or the inside tube parts (18, 19) are made of plastic and are bonded to the rubber, and in that the inside diameter and the thickness of material of the inside tube (18, 19) are selected such that the inside tube (18, 19) is pressed onto the inside part (2) with deformation of the plastic material.

2. Joint bearinig according to Claim 1, characterized in that a first and second bearing ring (30, 31; 32, 33) with a rubber wall (34, 35) vulcanized in between form a prefabricated, combined sealing component (28, 29) prior to assembly of the joint bearing (1).

3. Joint bearing according to Claim 2, characterized in that the bearing rings (30, 31; 32, 33) are pressed onto the inside part (2) or onto the retainer lug (3) in the axial direction and the first bearing rings (30, 31) are pressed against the end faces of the inside tube parts (18, 19).

4. Joint bearing according to one of Claims 1 to 3, characterized in that the thickness of the rubber wall (34, 35) is thinner in the central region between the bearing rings (30, 31; 32, 33) and thicker towards the bearing rings (30, 31; 32, 33).

5. Joint bearing according to one of Claims 1 to 4, characterized in that the thickening (9) is ball-shaped.

6. Joint bearing according to one of Claims 1 to 4, characterized in that the thickening (9) has a central, cylindrical region (11) with oblique regions (12, 13) sloping towards the side.

7. Joint bearing according to one of Claims 1 to 6, characterized in that the compression rings (22, 23) have a surface area set obliquely towards the bearing centre.

8. Joint bearing according to one of Claims 1 to 7, characterized in that the inside space of the retainer lug (3) is cylindrical.

9. Joint bearing according to one of Claims 1 to 8, characterized in that the devices for fastening the compression rings (22, 23) each consist of a distancing ring (27) and a Seeger circlip ring (14, 15).

10. Joint bearing according to one of Claims 1 to 9, characterized in that a narrow gap (26) is provided extending radially between the two inside tube parts.

11. Joint bearing according to one of Claims 1 to 10, characterized in that an axle link (36) is connected to the retainer lug (3).

FIG. 1